# EUROPEAN PATENT SPECIFICATION

(11) **EP 0 875 060 B1**
(45) Date of publication and mention of the grant of the patent: **21.04.2004**
(21) Application number: 96900446.4
(22) Date of filing: 16.01.1996
(51) Int. Cl.: G11B 7/09, G11B 7/095, G11B 7/007

(54) **OPTICAL DISK**
OPTISCHE PLATTE
DISQUE OPTIQUE

(43) Date of publication of application: 04.11.1998
(73) Proprietor: MATSUSHITA ELECTRIC INDUSTRIAL CO., LTD., Kadoma-shi, Osaka 571-8501 (JP)
(72) Inventor: SHIMADA, Toshiyuki, Kita-ku, Kobe-shi, Hyogo 651-1513 (JP); SHOJI, Mamoru, Sakai-shi Osaka 591-0041 (JP); ISHIDA, Takashi, Yawata-shi, Kyoto 614 (JP); OHARA, Shunji, Higashiosaka-shi, Osaka 578 (JP)
(74) Representative: Haley, Stephen
(86) International application number: PCT/JP1996/000048
(87) International publication number: WO 1997/026651

(56) References cited:
- EP-A- 0 397 354
- EP-A- 0 443 822
- EP-A- 0 478 329
- EP-A- 0 559 493
- EP-A- 0 587 111
- EP-A- 0 662 685
- WO-A-92/04712
- DE-A- 4 411 855
- US-A- 4 755 980
- US-A- 4 907 212

## Description

### Technical Field

The present invention relates to an optical disk for recording and reproducing information to and from it.

### Background Art

In recent years, an optical disk apparatus has been prosperously developed as a means for recording and reproducing data of large capacity. For this purpose, many approaches to the higher recording density are made. For achieving such a high recording density, it is necessary to reduce the inter-recording pit interference, improve the S/N ratio, and compensate the signal quality for the degradation caused by the fluctuations of optical disk medium and/or optical disk apparatus. Specifically, such fluctuations mainly relate to the physical distortion of the optical disk and the propensity of the electrical circuit used in the optical disk apparatus.

With reference to Fig. 36, the first case relating to the physical distortion of the optical disk is described. Principally, an optical disk D should be kept in a flat disk shape when it is set in a disk motor Md, so that an optical pickup Os can keep its optical axis perpendicular to the recording surface of the disk D during recording and reproducing operation. For scanning the recording tracks, the optical pickup Os moves in a radial direction indicated by an arrow Dr on a line LR in alignment with the radius of the optical disk D.

However, the optical disk D set in the disk motor Md will hang down its outer circumference due to its weight. In other words, the optical disk D inclines downward in a conical shape instead of the flat plate disk shape. Strictly speaking, the optical disk D also curves both in the radial and circumferential directions. Therefore, as a result of such an inclination of the disk D, the optical pickup Os can not scan the recording tracks with its optical axis Ax across the recording surface of the disk D at a right angle. Furthermore, the crossing angle varies according to the position of the optical pick Os with respect to the optical disk D (the line LR).

Under such conditions, an angle θr formed between the optical axis Ax and the recording surface of the disk D is defined as a "radial tilt angle." An angle θt formed between the optical axis Ax and a line LD tangential to the recording track (or perpendicular to the radius) of the optical disk D is referred to as a "tangential tilt." Generally, the amount of radial tilt θr of the optical disk such as a compact disk is within the range from -0.5° to 0.5°.

The second case relating to the propensity of electric circuits appears such that the laser beam can not be correctly focused and tracked on the target recording track even when the focus or tracking signal indicates that the laser spot is correctly focused and tracked. These kinds of focus error or tracking error occur regardless of that the physical distortion such as the radial tilt or the tangential tilt is compensated.

As a result of the above described fluctuations, the optical pickup Os can not make the laser spot focused on the aimed recording track or trace thereof.
Specifically, the laser spot thus focused bridges over two neighboring tracks, scans the recording tracks with varying the crossing angles, and scans little or partially the aimed recording track but non aimed track much.
Furthermore, the laser spot can not trace the recording track, and may loose the track of aimed recording track. Therefore, the signal reproduction is facing the problems of crosstalk, insufficient amplitude, noise, wave form interference, and jittering (asynchronization with the original signal). Thus, the reproduced recording signal will jitter. When the jittering becomes greater, the quality of reproduced recording signal is considerably degraded. Furthermore the reading error by the optical pickup increases.

In Fig. 37, the relationship between the jittering amount (%) and the radial tilt (θr), obtained by an experiment, is shown. The jittering amount shows its minimum value within a range from +0.1 to -0.1 degree with respect to the zero-radial tilting position. It is also apparent that the jittering becomes greater at an increasing tempo as the radial tilt θr becomes greater. In other words, the jitter shows its minimum when the radial tilt θr is set to the minimum.

Therefore, for reproducing the original signal from the recording track under such fluctuating factors, it is necessary to adjust the optical disk apparatus with respect to the physical fluctuations such as radial tilt and tangential tilt, and the electrical fluctuation such as focus error and tracking error.

With reference to Fig. 38, a conventional optical disk apparatus which compensates for the radial tilt is described. The conventional radial optical disk apparatus includes an optical disk 8101, an optical head 8102, a tilt sensor 8103, a preamplifier 8104, a radial tilt controller 8105, and a radial tilt adjuster 8106.

In operation of thus constructed conventional optical disk apparatus, the tilt sensor 8103 outputs a tilting signal Sr having a voltage responding to the tilting amount of the optical disk 8101 with respect to the optical head 8102. The preamplifier 8104 amplifies the tilting signal Sr. The radial tilt controller 8105 drives the radial tilt adjuster 8106 such that thus amplified tilting signal Sr becomes zero. Thus, the optical head 8102 can be kept in a position parallel to the optical disk 8101 so that a signal with a good quality can be recorded thereto or reproduced therefrom.

However, with a configuration mentioned above, the tilt sensor (8103) is an essential component, causing the manufacturing cost expensive, and should be arranged beside the optical head (8103), preventing the miniaturization of the optical disk apparatus.
Furthermore, the tilt sensor should be correctly located in parallel to the optical head, otherwise the parallelism of optical head to the optical disk can not be adjusted correctly.

EP0662685A discloses a skew detecting and correcting system for use with optical disks. Skew is determined by detecting both a waveform representing the reflection of the main spot light from the disk and a waveform representing the reflection of a side lobe of the light spot. Each frame of the data track includes a reference pit pattern in which the pits are spaced apart by a predetermined distance, the distance ensuring that analysis and comparison of the two waveforms results in detection of the skew quantity.

The object of the present invention is therefore to provide an optical disk apparatus which solves these problems.

The present invention has been developed with a view to substantially solving the above described disadvantages and has for its essential object to provide an improved optical disk apparatus.

Accordingly, the invention consists of an optical disk for use in an optical disk apparatus which reproduces signals, from a plurality of recording tracks formed on said optical disk, by focussing a light spot on the plurality of recording tracks, said optical disk including a first recording track;
characterised by a calibration data track area comprising a second recording track having recorded therein a predetermined mark pattern;
wherein said predetermined mark pattern comprises a combination of two first marks wherein one of the first marks has a first predetermined length 6T, the other of the first marks has a second predetermined length 7T, and
a second mark having a third predetermined length 3T,
wherein said two first marks are separated from each other by a first predetermined space having said third predetermined length, and
wherein said second mark is separated from said two first marks by a second predetermined space having the second predetermined length and the second mark is separated from a subsequent mark by a third predetermined space having said first predetermined length; and where T is the channel bit length.

These and other objects and features of the present invention will become clear from the following description taken in conjunction with the preferred embodiments thereof with reference to the accompanying drawings throughout which like parts are designated by like reference numerals, and in which:
Fig. 1A is a plan view schematically showing an optical disk having a calibration data area formed therein according to the present invention;
Fig. 1B is a plan view schematically showing an alternative of the optical disk of Fig. 1A;
Fig. 1C is a plan view schematically showing an optical disk having two calibration data areas formed therein according to the present invention;
Fig. 2 is graph schematically showing an erasable (re-writable) type of optical disk;
Fig. 3 is an enlarged view of a portion the calibration data area of Fig. 1A which is enclosed by a circle R;
Fig. 4 is a graph schematically showing a first example of signals recorded in the calibration data area of Figs. 1A, 1B, and 1C;
Fig. 5A is a graph schematically showing the pits arrangement of the specific pattern signal of Fig. 3;
Fig. 5B is a graph schematically showing a specific example of pits arrangement of Fig. 5A;
Fig. 6 is a graph showing a sector construction of the specific pattern signal of Fig. 4;
Fig. 7 is a graph showing the relationship between the pit pattern and the signal reproduced therefrom;
Fig. 8 is a block diagram showing an optical disk apparatus;
Fig. 9 is a block diagram showing a jitter amount measurer and a phase locked loop unit (PLL) of Fig. 8;
Fig. 10 is a graph schematically showing a construction of a radial tilt adjuster of Fig. 8;
Fig. 11 is a flow chart showing a main routine of operation performed by the optical disk apparatus of Fig. 8 with the optical disk of Fig. 1A;
Fig. 12 is a graph in assistance of explaining the radial tilt adjustment;
Fig. 13 is a flow chart showing the radial tilt evaluating routine block #5 of Fig. 11 and blocks #15 and #23 of Fig. 14.
Figs. 14 is a flow chart showing a main routine of operation performed by the optical disk apparatus of Fig. 8 with the optical disk of Fig. 1C;
Fig. 15 is a graph showing a relationship between the address and the optimum radial tilt adjusting position;
Fig. 16 is a graph schematically showing a second example of signals recorded in the calibration data area of Figs. 1A, 1B, and 1C;
Fig. 17 is a graph showing a sector construction of the 11T signal of Fig. 16;
Fig. 18 is a graph schematically showing a third example of signals recorded in the calibration data area of Figs. 1A, 1B, and 1C;
Fig. 19 is a graph showing an alternative of the calibration data area of Fig. 3;
Fig. 20 is a graph schematically showing a first example of signals recorded in the calibration data area of Fig. 19;
Fig. 21 is a graph schematically showing a second example of signals recorded in the calibration data area of Fig. 19;
Fig. 22 is a graph schematically showing a third example of signals recorded in the calibration data area of Fig. 19;
Fig. 23 is a graph showing other alternative of the calibration data area of Fig. 3;
Fig. 24 is a graph schematically showing a first example of signals recorded in the calibration data area of Fig. 23;
Fig. 25 is a graph schematically showing a second example of signals recorded in the calibration data area of Fig. 23;
Fig. 26 is a graph schematically showing a third example of signals recorded in the calibration data area of Fig. 23;
Fig. 27 is a graph showing further alternative of the calibration data area of Fig. 3;
Fig. 28 is a graph schematically showing a first example of signals recorded in the calibration data area of Fig. 27;
Fig. 29 is a graph schematically showing a second example of signals recorded in the calibration data area of Fig. 27;
Fig. 30 is a graph schematically showing a third example of signals recorded in the calibration data area of Fig. 27;
Fig. 31 is a block diagram showing an optical disk apparatus;
Fig. 32 is a graph schematically showing a construction of a tangential tilt adjuster of Fig. 31;
Fig. 33 is a graph in assistance of explaining the tangential tilt adjustment;
Fig. 34 is a block diagram showing an optical disk apparatus;
Fig. 35 is a block diagram showing an optical disk apparatus;
Fig. 36 is a graph in assistance of explaining the radial tilt of the optical disk;
Fig. 37 is a graph in assistance of showing the relationship between the radial tilt and the jittering amount; and
Fig. 38 is a block diagram showing a conventional optical disk apparatus.

### Best Mode For Carrying Out the Invention

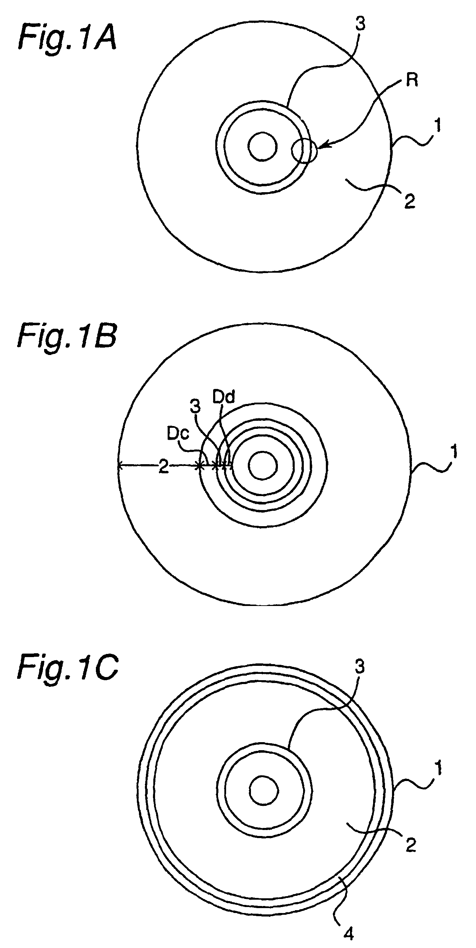

Referring to Fig. 1A, one example of an optical disk according to the present invention is shown schematically. The optical disk 1 has a data recording area 2 and a calibration data area 3 formed in a lead-in area thereof. In the calibration data area 3, a predetermined calibration data is recorded.

Referring to Fig. 1B, a specific example of the optical disk 1 similar to that of Fig. 1A is shown. In this example, the optical disk 1 additionally has a dummy data area Dd provided inside of the calibration data area 3, and a control data area Dc provided between the calibration data area 3 and the recording area 2. These areas Dd, 3, and Dc are formed in a lead-in area of the disk 1.

The dummy data area Dd extends toward the center of disk 1 to the position to which the optical pick up of the optical disk apparatus can access. The dummy data area Dd is recorded with dummy data only for enabling the optical pick up to access thereto so as to place the optical pick-up in inner area than the calibration data area 3.

The calibration data area 3 is recorded with a calibration data recorded to preferably, but not limited to, more than one-fourth of a full circle thereof. The control data area Dc is recorded with various information data relating to the optical disk 1 such as addresses of the calibration data area 3.

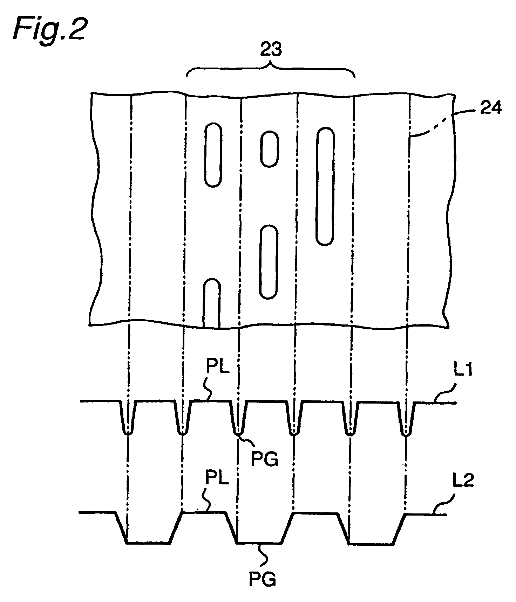

Referring to Fig. 2, calibration data area 3, formed in an erasable or re-writable type of optical disk for example, enclosed by a circle R in Fig. 1A are shown. The calibration data area 3 has at least one calibration data track area 23, wherein the calibration data is recorded. The calibration data track area 23 preferably comprises three recording tracks.

Each track has a plurality of pits formed therein for recording information, and is independent from the neighboring tracks. The boundaries of these neighboring tracks are indicated by imaginary lines 24 in Fig. 2 for the sake of better recognition. The recording track is defined by a land portion PL and a groove portion PG.

An upper line L1 shows a surface outline of the optical disk wherein the information is recorded only in the land portions PL. In this case, the groove portions PG are defined as the boundary lines 24. When the information is recorded in the groove portions PG only (not shown in Fig. 2), the land portions PL are defined as the boundary lines 24.

A lower line L2 also shows a surface outline of the optical disk wherein the information is recorded both in the land and groove portions. In this case, each area between neighboring leading and trailing edges corresponds to each recording area that is a groove portion PG or a land portion PL.

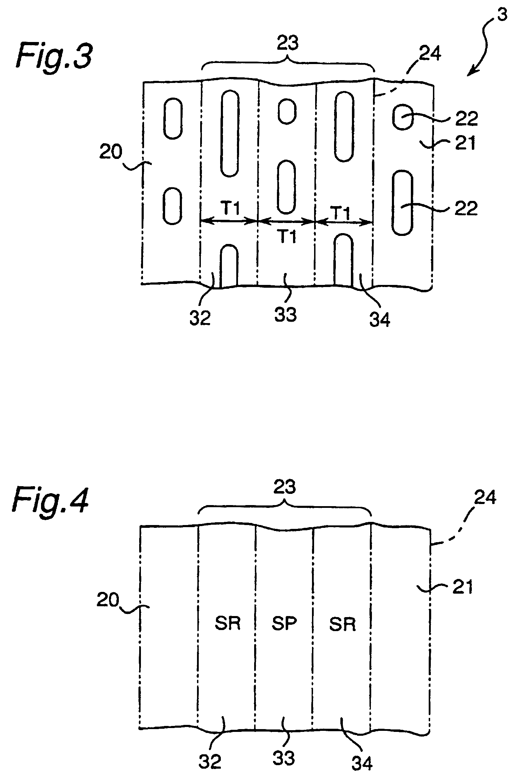

Referring to Fig. 3, an example of calibration data area 3 is shown on an enlarged scale. The data area 3 has three tracks 32, 33, and 34. In this embodiment, the first, second, and third tracks 32, 33, and 34 are arranged in order from the inside toward the outside of the optical disk 1. On both sides of the calibration data track area 23, tracks 20 and 21 are provided, respectively. Each track has a plurality of pits 22 formed therein for recording information.

The boundary lines, indicated by imaginary lines 24, may be actually defined by any suitable indicating means such as grooves or images. Hereinafter, a pit and a distance between neighboring two pits in a single track are referred to as a "pit mark" and a "pit space", respectively. Furthermore, the distance between neighboring two tracks corresponding to a distance between neighboring two boundary lines 24 is referred to as a "track width" in this specification. Note that, all tracks 32, 33, and 34 have the same track width T1 as that of recording tracks formed in the recording area 2 of the optical disk 1, as best shown in Fig. 3.

Note that the "pit mark" in this specification means a certain portion having a different characteristic in light reflecting ability from the other portions of the matrix of the optical disk, and is used for recording digital information. For example, in the compact disk system, the pit mark is formed by engraving or rasing corresponding portion of the matrix of the optical disk. Furthermore, in a phase changing optical disk, the pit is formed by non-crystallizing corresponding portion of the matrix so that the pit portion is different from the other matrix in the crystallization construction. Also, in the magneto optic disk, the pit is formed by chaining the direction of lattice plane of the corresponding portion. Thus, it is apparent that any suitable construction or substance that has a different characteristic in light reflecting ability from the other portions of the matrix.

Referring to Fig. 4, a first example showing signals recorded in the calibration data track area 23 (3) of Fig. 3 is shown. Note that no pit is indicated in this figure for the sake of brevity. The first track 32 is recorded with a random signal SR. The second track 33 is recorded with a specific pattern signal SP. The third track 34 is recorded with the random signal SR.

The random signals SR is produced according to a (2,10) Run Lenght Limited Code, and including 3T signal S3T to 11T signal S11T. Note that "T" represents a channel bit length according to ISO/IEC 13963.

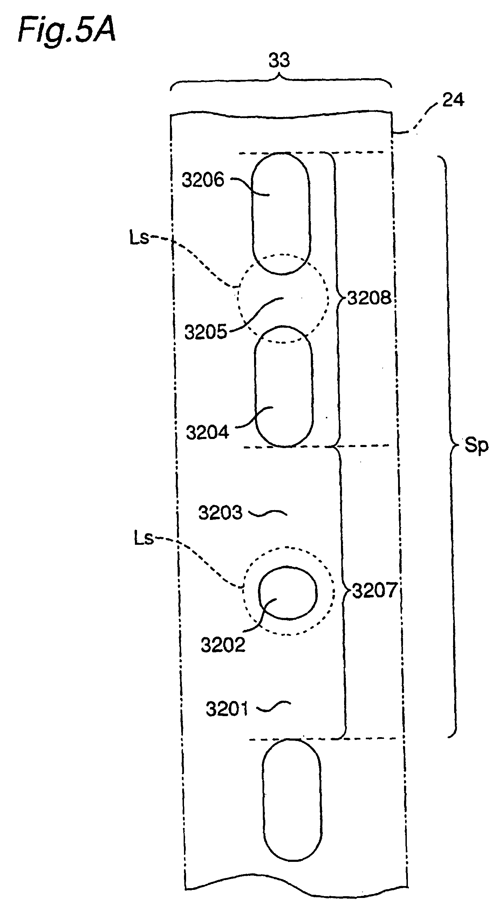

This situation can be described as follows with reference to the pit mark and pit space on the optical disk 1. The random signal SR is a combination of a plurality of pit marks and pit spaces. The pit marks have a predetermined number, nine for example, of different length each corresponding to that of 3T signal S3T to 11T signal S11T. The pit spaces have a predetermined, nine for example, of different lengths each corresponding to that of signals S3T to signal S11T. The first specific pit pattern recorded in the second track 33 will be described later with reference to Fig. 5A.

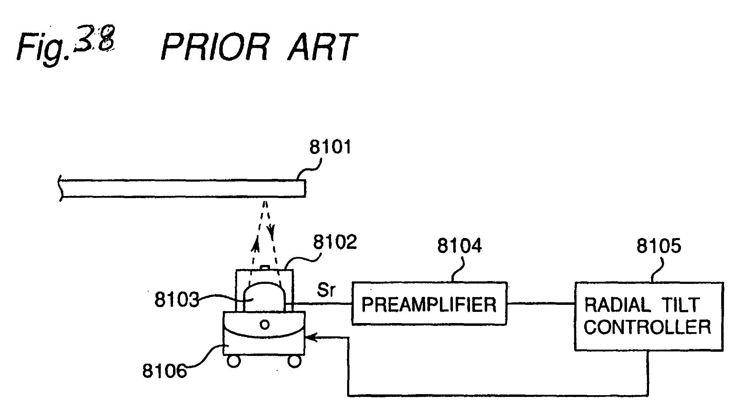

An apparatus for recording these calibration signals such as signals SR and SP to the calibration data track area 23 will be described later. By utilizing such calibration data recording apparatus (Fig. 35), the vender or user can prepare the optical disk recorded with the calibration data before or after the shipment of the optical disk to the user.

Note that the data recording area 2 of the optical disk 1 is recorded with a signal which is produced a (2,10) Run Length Limited Code, hereinafter referred to as a "2-10 modulation." Any other modulation process other than 2-10 modulation is applicable according to the present invention. For example, a 3T signal S3T according to the 2-10 modulation process corresponds to a 2T signal according to a (1,7) Run Length Limited Code, hereinafter referred to as "1-7 modulation." A 11T signal S11T according to the 2-10 modulation process corresponds to an 8T signal S8T according to the 1-7 modulation. The 3T signal S3T and 11T signal S11T shall correspond to the minimum run length and the maximum run length, respectively, according to other modulation process.

Referring to Fig. 5A, an example of the pit pattern of the specific pattern signal SP is schematically shown. The specific pattern signal SP is formed by repeating a combination of first and second pit patterns 3207 and 3208. In other words, the first and second pit patterns 3207 and 3208 are alternately recorded to the aimed recording track, for example the second recording track 33 of the calibration data area 23.

The first pattern 3207 includes a minor pit mark 3202 and two major pit spaces 3201 and 3203 each arranged on before and after the minor pit mark 3202 with respect to the recording order. The minor pit mark 3202 is smaller than a laser spot Ls indicated by a dot line in Fig. 5A, and may correspond to the minimum run length. The major spaces 3201 and 3203 are greater than the laser spot Ls, and may correspond to the maximum run length.

The second pit pattern 3208 includes a minor pit space 3205 and two major pit marks 3204 and 3206 respectively arranged before and after the minor pit space 3205. The minor pit space 3205 is smaller than the laser spot Ls, and may correspond to the minimum run length. The major pit marks 3204 and 3206 are both greater than the laser spot Ls, and may correspond to the maximum run length.

Note that the diameter of laser spot Ls is determined so that the laser spot Ls has a light strength as 1/e² times of a central strength, wherein "e" represents the base of a natural logarithm. It is also possible to add address and Error Correction Code (hereinafter referred to as "ECC") to the specific pattern signal SP within a single sector thereof.

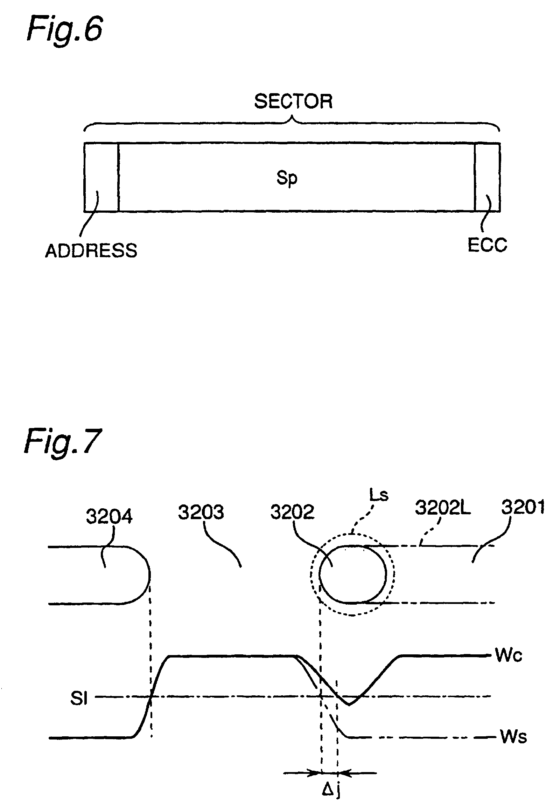

Referring to Fig. 6, one example of the specific pattern signal SP within a single sector is shown. The address data and Error Correction Code are added to ends of the specific pattern signal SP, respectively.

Referring to Fig. 7, a signal reproduced from the data track 33 having pit patterns of Fig. 5A is schematically shown. A solid line Wc represents a signal reproduced from the pit pattern 3207 of Fig. 5A, wherein the pit mark 3202 smaller than the laser spot Ls sandwitched by pit spaces 3201 and 3203 each greater than the laser spot Ls. An imaginary line Ws represents a signal reproduced from a pit mark 3202L greater than the laser spot Ls. The pit mark 3202L is formed in a shape of the pit mark 3202 but is elongated toward the pit space 3201 accordingly.

A horizontal center line S1 is a slice line dividing the amplitude of the reproduced signal. Since the laser beam reflected from the track (33) changes according to the area of pit, the reproduction signal from the pit mark 3202L changes its amplitude greater than that from the pit mark 3020 does. In this case, the pit mark 3202L reduces the amplitude of the signal Wc reflected therefrom more and rapidly than the pit mark 3202 does.

As a result, the reproduction signal Ws crosses the slice line S1 earlier than the signal Wc by a jittering amount Δj, as apparently shown in Fig. 7. A distance between these crossing points represents a jittering of reproduced signal at which the present invention aims. For forming these pit marks, any marking means distinguishable from the matrix portion such as undulated surfaces (sunk or rased from the matrix surface), magnetizing direction, and crystallization state (crystallized or amorphous) can be used.

In stead of the pattern shown in Fig. 5A, it is possible to form the specific pattern signal SP so as to compare the reproduction amplifier of a pit mark or a pit space smaller than the laser spot with a pit mark or a pit space greater than the laser spot. Such pattern is effective for the optimization of the signal processing circuits such as the adjustment of the equalizer's coefficient, which will be described later. Note that the calibration data area 23 only needs one track that is recorded with the specific pattern signal SP for producing the jittering in the signal reproduced therefrom.

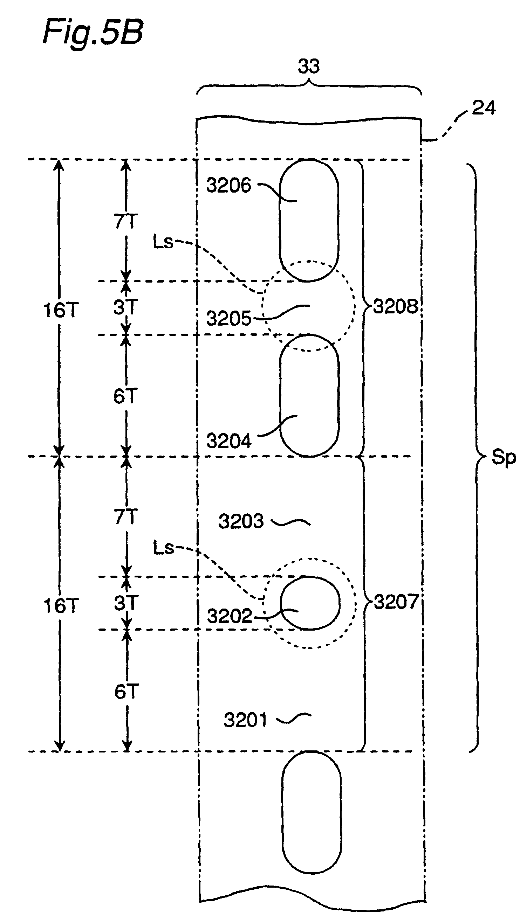

Referring to Fig. 5B, a typical example of the pit pattern according to the present invention of the specific pattern signal SP of Fig. 5A is shown. The first pit pattern 3207 is formed such that the first major pit space 3201, the minor pit mark 3202, and the second major pit space 3203 extend in the longitudinal direction of the track by the lengths 6T, 3T, and 7T, respectively. In other words the major pit mark 3202 is separated from the neighboring pit marks by the intervals 6T and 7T, respectively, as best shown in Fig. 5B. The first pit pattern 3208 has the length of 16T.

The second pit pattern 3208 is formed such that the first major pit mark 3204, the minor pit space 3205, and the second major pit mark 3206 extend in the longitudinal direction of the track by the length 6T, 3T, and 7T, respectively. In other words, the two major pit marks 3204 and 3206 are separately arranged with the interval 3T which is the length of the minor pit space 3205. The second pit pattern 3208 has the length of 16T.

In this example, the recording track 33 for example is recorded by the specific pattern signal SP formed by the repeatedly arranged two pit patterns 3207 and 3208 each having the length 16T. However, it is apparent from the descriptions with reference to Fig. 7 that the specific pattern signal SP that only repeating one of two pit patterns 3207 and 3208 is enough for producing the jittering in the reproduced signal. Needless to say that the combination of the two pit patterns 3207 and 3208 is effective to enhance the production of jittering.

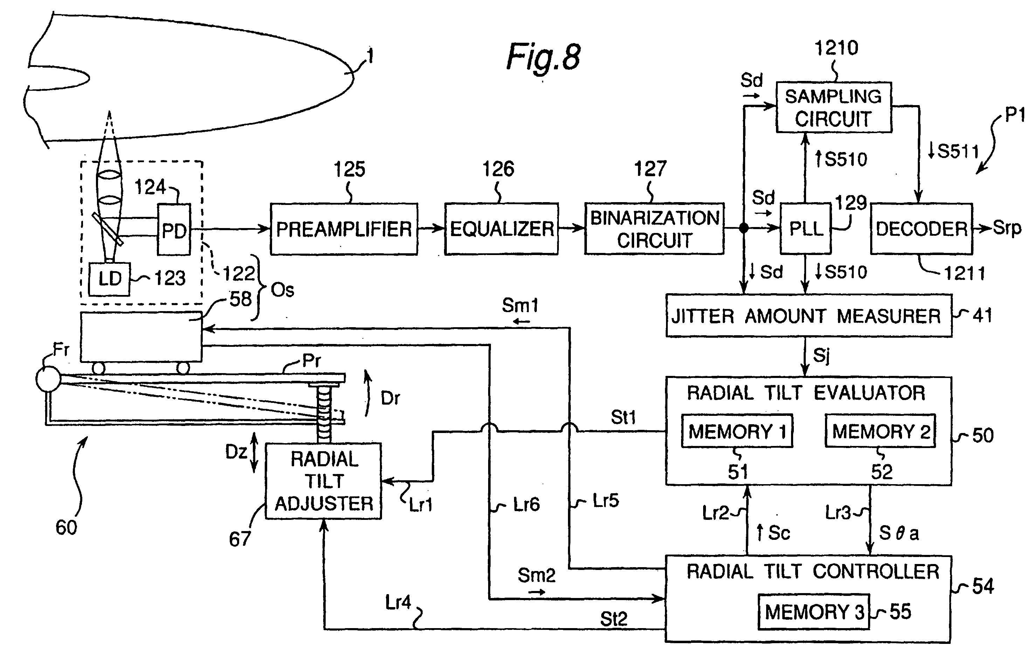

Referring to Fig. 8, an example of an optical disk apparatus is shown. The optical disk apparatus P1 includes an optical pickup unit 122 for impinging a laser beam to an optical disk 1 for recording the information thereto and reproducing the information therefrom. For this purpose, the optical pickup unit 122 includes a laser diode 123 for impinging the laser beam, optical instruments for focusing the laser beam on a recording track of the optical disk 1 and the reflected laser beam from the optical disk 1 on a desirable position, and a pin photo diode 124 for receiving the reflected laser beam to produce an electric signal indicative of the condition of thus laser impinged recording track.

A transporter 58 is provided for moving the optical pickup unit 122 in the radial direction of the optical disk 1 so as to scan the recording tracks formed thereon by impinging the laser beam thereto. Thus, the optical pickup unit 122 and the transport 58 construct an optical pickup system Os. The transporter 58 is placed on a tilting unit 60 which can tilt or incline in the radial direction with respect to the optical disk 1.

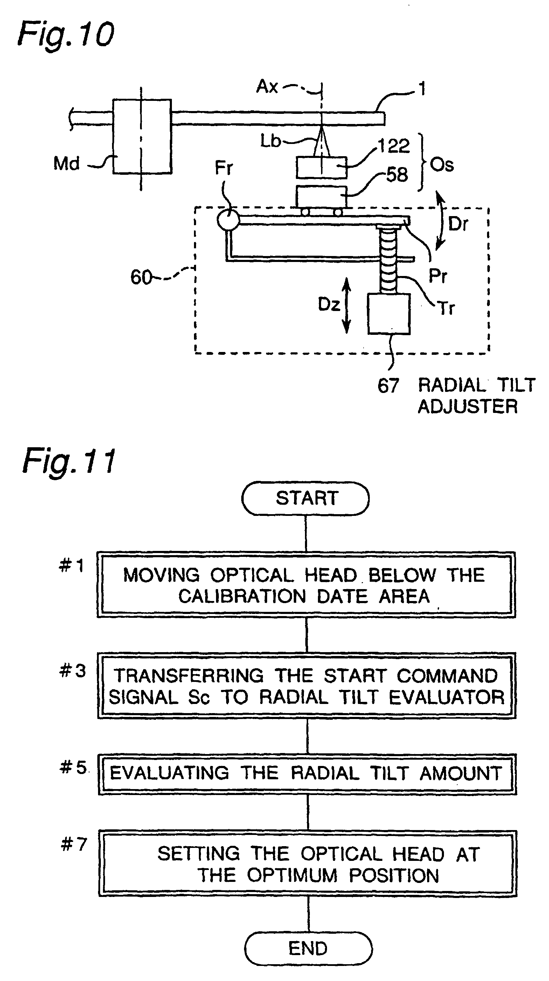

Referring to Fig. 10, the tilting unit 60 is shown. The tilting unit 60 has a base plate Pr for supporting the transporter 58 thereon and a fulcrum member Fr. One end of base plate Pr is redoubtably connected the fulcrum member Fr, as in a manner of cantilever, and another end thereof is placed on one end of a vertical reciprocating member Tr. The other end of the vertical reciprocating member Tr is slidably connected to a radial tilt adjuster 67. In this example, the vertical reciprocating member Tr is made by a screw which can be turned by the radial tilt adjuster 67, and is reciprocated in the vertical direction indicated by an arrow Dz.

Every time when the base plate Pr is tilted by the turn of the reciprocating member Tr, the jittering amount of the signal reproduced from the calibration data track area 23 by the optical pickup unit 122 is measured. According to changes of the tilting angle of the base plate Pr, the angle of optical axis Ax of the pickup unit 122 with respect to the recording surface of the disk 1 also changes. As a result, the crosstalks from the first and third tracks 32 and 34 neighboring to the second track 33 vary, and then the jittering of the signal reproduced from these calibration data track 33 also varies. Note that the position at which the jittering amount of the reproduced signal shows its smallest value is the optimum position for the radial tilt.

Referring back to Fig. 8, a preamplifier 125 is connected to the optical pickup unit 122 for increasing an amplitude of signal from the pin photo diode 124, and produces a reproduction signal. This reproduction signal varies according to the lengths of pits formed in the recording track of the optical disk 1.

An equalizer 126 is connected to the preamplifier 125 for receiving the reproduction signal and reduces the wave interference of the reproduction signal. A binarization circuit 127 is connected to the equalizer 126 for converting the reproduction signal into a digitalized reproduction signal Sd. It is to be noted that the digitalized reproduction signal Sd is subject to the crosstalk, insufficient amplitude, noise, wave form interference, and jittering, as described in the above.

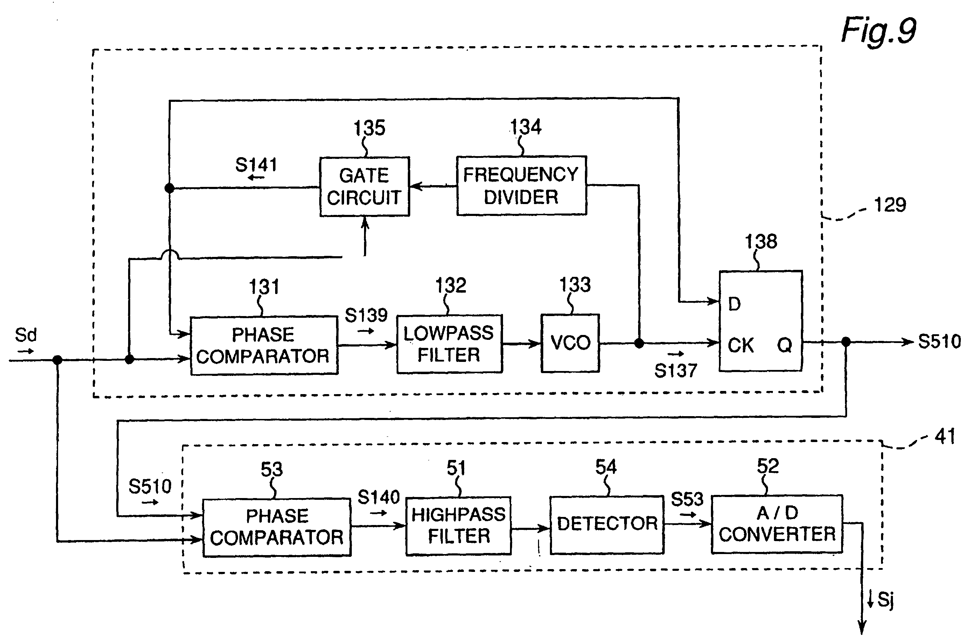

A phase locked loop unit (PLL) 129 is connected to the binarization circuit 127 for receiving the digitized reproduction signal Sd therefrom, and produces a synchronization signal S510. The generation of the synchronization signal S510 will be described later with reference to Fig. 9.

A sampling circuit 1210 is connected to the binarization circuit 127 and the phase looked loop unit 129 for receiving the digitized reproduction signal Sd and the synchronization signal S510, respectively, therefrom.
Then, the sampling circuit 1210 samples the digitized reproduction signal Sd with respect to the synchronization signal S510 to produce a channel data S511.

A decoder 1211 is connected to the sampling circuit 1210 for receiving the channel data S511 therefrom, and decodes it by applying the error correction to reproduce an original signal Srp. Thus decoded signal Srp is further transferred to the next stage of operation.

A jittering amount measurer 41 is connected to the binarization circuit 127 and the phase locked loop unit 129 for receiving the signals Sd and S510 therefrom, respectively. Based on these two signals Sd and S510, the jittering amount measurer 41 measures the jittering amount of the signal reproduced from the calibration data track area 23, and produces a jittering signal Sj.

Referring to Fig. 9, the details of the phase locked loop unit 129 and the jittering amount measurer 41 are described. The phase loop lock unit 129 includes a first phase comparator 131, a low-pass filter 132, a voltage controlled oscillator (VCO) 133, a frequency divider 134, a gate circuit 135, and a D-type flip-flop circuit 138 connected to each other, as best shown in Fig. 9. The jittering amount measurer 41 includes a second phase comparator 53, a high-pass filter 51, a detector 54, and an A/D converter 52 connected to each other, as shown in Fig. 9. The first phase comparator 131 is connected to the binarization circuit 127 for receiving the digital reproduction signal Sd therefrom, and is further connected to the gate circuit 135 for receiving a signal S141 therefrom. The second phase comparator 53 is connected to the binarization circuit 127 and the D-type flip-flop circuit 138 for receiving the signals Sd and S510, respectively, therefrom.

In operation, the first phase comparator 131 detects a phase difference between the reproduction signal Sd and a signal S141 from the gate circuit 135 to produce a first phase difference signal S139 indicative of phase difference and frequency difference between those signals Sd and S141. The low-pass filter 132 extracts only the low frequency components from the difference signal S139 to produce a VCO control signal having a voltage for controlling the VCO 133. Based on this VCO control signal, the VCO 133 produces a clock signal S137. The frequency divider 134 divides the clock signal S137 into a predetermined frequency. The gate circuit 135 passes the signal output from the frequency divider 134 based on the reproduction signal Sd input thereto.

In other words, only when the reproduction signal Sd is present, the frequency divided signal S141 is transferred to the phase comparator 131 and the D-type flip-flop circuit 138 as the signal S139. At this time, the VCO 133 operates such that two input signals Sd and S141 (S139) have the same phase. As a result, the synchronization signal S510 synchronized with the basic period of the digitized reproduction signal Sd is obtained.

The second phase comparator 53 detects the phase difference between those signals Sd and S510, and then produces a second phase difference signal S140 indicative of thus detected phase difference.

The high-pass filter 51 extracts the high frequency components from the second phase difference signals S140 and transfers it to the detector 54.

The detector 54 detects this high frequency components and produces a signal S53. The greater the jitter of reproduction signal Sd would be, the greater the signal S53 becomes. The A/D convertor 52 digitalize this signal S53 to produce the jitter signal Sj indicative of (corresponding to) the current amount of radial tilt θr.

Referring back to Fig. 8, a radial tilt evaluator 50 including first and second memory storage 51 and 52 is connected to the jittering amount measurer 41 for receiving the jittering signal Sj to detect the amount of radial tilt θr. The radial tilt evaluator 50 produces a radial tilt adjuster control signal St1 for controlling the radial tilt adjuster 67 so as to tilt the tilting unit 60 by a predetermined tilting pitch. The evaluator 50 is connected to the radial tilt adjuster 67 by a line Lr1 for transferring the signal St1 therethrough.

A radial tilt controller 54 having a third memory storage 55 is connected to the radial tilt evaluator 50 by lines Lr2 and Lr3. The controller 54 is further connected to the radial tilt adjuster 67 by a line Lr4, and the transporter 58 by lines Lr5 and Lr6.

When the radial tilt calibration operation starts, the radial tilt controller 54 produces and transfers a start command signal Sc to the radial tilt evaluator 50 through the line Lr2. On receipt of the signal Sc, the radial tilt evaluator 50 produces the radial tilt adjuster control signal St1. Then, the optical pickup system Os starts to scan the calibration data area and reproduces the signal Sj in a manner described above. The radial tilt evaluator 50 detects the current jitter amount at the current titling angle based on the signals Sj and St1. Thus, detected address and the jitter amount are stored in the memory storages 51 and 52, respectively, and are renewed every time when the tilting unit 60 changes the tilting angle by the current signals Sj and St1.

Based on thus renewed data, the radial tilt evaluator 50 determines an optimum tilting angle at which the radial tilt θr is the smallest, and produces an optimum tilting angle signal Sθa. This signal Sθa is transferred to the radial tilt controller 54 through the line Lr3, and is stored in the memory storage 55.

The radial tilt controller 54 produces a radial tilt compensation signal St2 based on the signal Sθa indicative of the difference between the current tilting angle and the determined optimum angle. This radial tilt compensation signal St2 will be transferred to the radial tilt adjuster 67 through the line Lr4, so that the radial tilt adjuster 67 drives the tilting unit 60 to set the optical pickup system Os at the optimum radial tilt position.

The controller 54 further produces a transporter driving signal Sm1 for driving the transporter 58 to move the optical pickup system Os to scan the optical disk for recording or reproducing the signal. The transporter 58 produces an address signal Sm2 indicative of the current position of the system Os with respect to the optical disk 1, and feeds it back to the controller 54 through the line Lr6.

With reference to Fig. 11, the radial tilt adjusting operation by the optical disk apparatus P1 of Fig. 8 with the optical disk 1 of Fig. 1A is described bellow. Each of blocks in the flow chart shows the routine block.

At block #1, when the operation starts, the controller 54 controls the transporter 58 to move an optical head of the optical pickup unit 122 toward the lead-in area of the disk 1. The optical pickup 122 reads the lead-in area first to know the address of the calibration data track area 23. Based on this address data, the radial tilt controller 54 further controls the transporter 58 to move the optical head (optical pickup unit 122) to the position below the calibration data track area 23 of the disk 1. The optical pickup unit 122 reproduces the calibration data from the data track area 23. In this example, the calibration data track area 23 is provided in an inner circumference, but is not limited to thereto. Any suitable position in the disk 1 can be used for the calibration data track area 23. Then, the procedure advances to the next block #3.

At block #3, the radial tilt controller 54 produces and transfers the start command signal Sc to the radial tilt evaluator 50 to start the radial tilt evaluating operation. Then, the procedure advances to the next block #5.

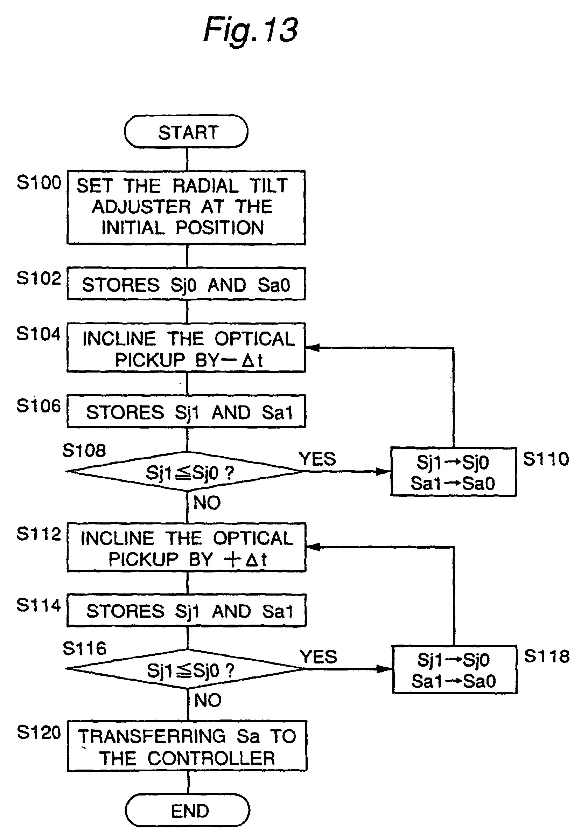

At block #5, the radial tilt evaluating operation by the radial tilt evaluator 50 is performed to obtain the optimum radial tilt θr. The operation of this block will be detailedly described later with reference to Fig. 13. Thereafter, the procedure advances to the next block #7.

At block #7, the radial tilt controller 54 stores the optimum tilting angle signal Sθa obtained at the block #5 in the third memory storage 3. Then, the radial tilt controller 54 further drives the radial tilt adjuster 67 to set the base plate Pr of tilting unit 60 at the optimum position according to the optimum tilting angle signal Sθ. Thereafter, the optical head of optical pickup unit 122 moves on the base plate Pr of the tilting unit 60 with the optimum radial tilt θr in the radial direction Dr for recording and reproducing operation.

It is to be noted that the radial tilt adjusting operation by the apparatus P1 with the optical disk 1 of Fig. 1B is substantially the same as these described above with reference to Fig. 11 except the operation at the block #1 as follows. At block #1, the optical pickup 122 reads the control data area Dc of the lead-in area first to know the address of the calibration data track 23. Based on thus read address data, the optical pickup unit 122 is moves in to the dummy data area Dd for securing that the optical head can access to the full area of calibration data area 3.

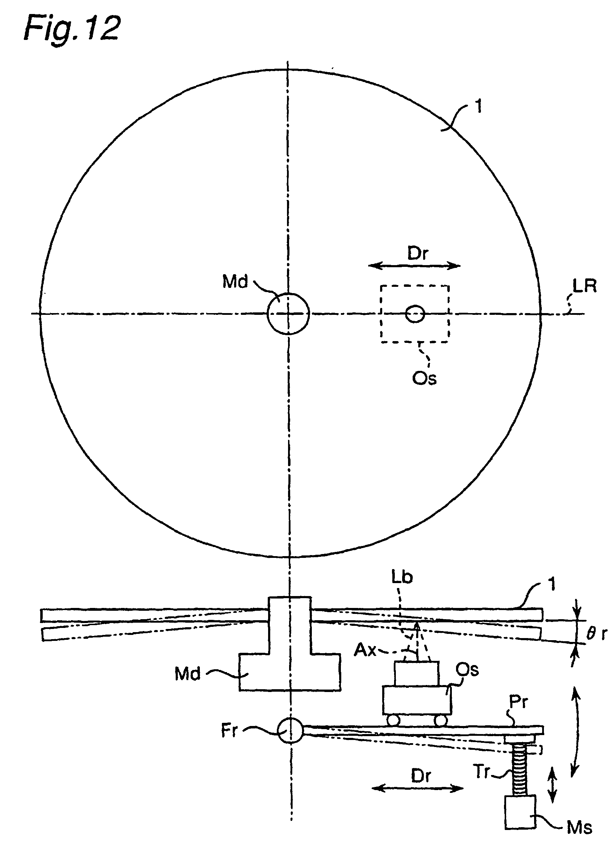

Referring to Fig. 12, the relationship between the base plate Pr of the tilting unit 60 and the radial tilt of the optical disk 1 is shown schematically. When the optical disk 1 has no radial tilt as indicated by solid lines, the base plate Pr is set parallel to the surface of the optical disk 1 so as to impinge the laser beam Lb, along the optical axis, on the disk 1 with a right angle. However, when the optical disk 1 has a radial tilt θr as indicated by broken lines, the optical disk surface inclines by the radial tilt angle with respect to the optical axis Ax. For compensating this inclination angle θr, a screw motor Ms of the radial tilt adjuster 67 pulls down the free end of the base plate Pr to incline thereof by the predetermined angle according to the radial tilt angle θr.

Referring to Fig. 13, the operation of radial tilt calibrating block #5 of Fig. 11 is shown.

At step S100, on receipt of the start command signal Sc from the radial tilt controller 54, the radial tilt evaluator 50 drives the radial tilt adjuster 67 to set to the initial position. The initial position is such a position at which the base plate Pr of the tilting unit 60 crosses the rotating axis of the disk motor Md with substantially a right angle. In other words, the free of the base 60 is preferably set at a center position between top and bottom dead positions thereof. The top and bottom dead positions are determined in consideration of Fig. 37, so that the base 60 can incline within the maximum radial tilting angle range (preferably, +0.5° to -0.5°). Then, the procedure advances to the next step S102.

At step S102, the radial tilt evaluator 50 detects the jitter amount corresponding to the current tilting angle θa based on the jittering signal Sj. Then, the current values indicating the tilting angle θa and the jittering amount Sj are stored in the address "0" of second memory storage 52 and first memory storage 51, respectively. Hereinafter, these tilting angle and jittering amount with respect to the address of each memory storage are expressed with the suffix of "address number" after each reference symbol, such as θa0 and Sj0, for the sake of recognition. Then, the procedure advances to the next step S104.

At step S104, the radial tilt evaluator 40 drives the radial tilt adjuster 67 to move downward (or clockwise) by a predetermined amount Δt so as to incline the base 60 downward by an angle θa. This amount Δt is determined according to the resolution thereof, and is preferably 0.1 degree in consideration of Fig. 37. This is because that the optical disk 1 is apt to hang down its circumference when it is set in the disk motor Mb, as previously described with reference to Fig. 36. Therefore, by turning down the base 60, it can be expected that the radial tilt θr will be improved. Hereinafter, the downward direction is expressed with a prefix of "-" before the moving amount, such as -Δt, and the upward (or anti-clockwise) direction with a prefix of "+", such as +Δt. Then, the procedure advances to the next step S106.

At step S106, the radial tilt evaluator 50 detects the current jitter amount corresponding to the current radial tilt when the base 60 is rotated clockwise (Fig. 36) by the resolution angle -Δt. Then, thus detected current jittering amount Sj1 and the tilting θa1 are stored in the address "1" of first memory storage 51 and second memory storage 52, respectively. It is to be noted that the jittering amount Sj will be detected every time when the base 60 is moved up or down by the resolution angle Δt. Therefore, the interval between moving the base 60 by Δt is defined as a radial tilt evaluation cycle hereafter. Then, the procedure advances to the next step S108.

At step S108, it is judged whether the jittering amount Sj1 of the current evaluation cycle is equal to or smaller than that Sj0 of previous evaluation cycle, or not. When the radial tilt is improved, the jittering amount Sj becomes smaller, and it is judged "YES." Then the procedure advances to step S110.

At step S110, the jittering amount Sj0 and tilting angle θa0 stored in the memory storages 1 and 2, respectively, at the previous evaluation cycle are replaced with the current jitter values Sj1 and tilting angle θa1, respectively. Then, the procedure returns to step S104. Note that the operation of steps S110, S104, S106, and S108 is repeated until when it is judged "NO" at step S108. Thus, the optimum position at which the jittering amount Sj is the smallest, meaning that the radial tilt is also the minimum, is searched for, with respect to the clockwise direction.

However, when it is judged "NO" at step S108, it is meant that the radial tilt becomes worse than the previous cycle by tilting the base 60 downward. Therefore, the operation to tilt down the base 60 is quitted, and then the procedure advance to the next step S112.

At step S112, the radial tilt evaluator 50 drives the radial tilt adjuster 67 to move upward by the minimum resolution amount +Δt so as to detect the optimum position in this direction. Then, the procedure advances to the next step S114.

At step S114, the current jittering amount Sj1 and the tilting θa1 are stored in the address "1" of first memory storage 51 and second memory storage 52, respectively, in a manner similar to that of step S106. Then, the procedure advances to the next step S116.

At step S116, it is judged whether the jittering amount Sj1 of the current evaluation cycle is equal to or smaller than that Sj0 of previous evaluation cycle, or not. When it is judged "YES", it is meant that the radial tilt is improved, and the procedure advances to step S118.

At step S118, the jittering amount Sj0 and tilting angle θa0 stored in the memory storages 51 and 52, respectively, are replaced with the current values Sj1 and tilting angle θa1, respectively, in a manner similar to that at step S110. Then, the procedure returns to step S112. Note that the operation of steps S118, S112, S114, and S116 is repeated until when it is judged "NO" at step S116, as the same as in step S108. And, the optimum position for reducing the radial till most is searched for, with respect to the anti-clockwise direction.

When it is judged "NO" at step S116, it is meant that the tilting angle at the previous evaluation cycle is the optimum position for reducing the radial tilt most as the result of searching both in the clockwise and anti-clockwise directions. Then the procedure advances to step S120.

At step S120, the tilting angle θa0 currently stored in the memory storage 2 is transferred to the radial tilt controller 54 as the optimum tilting angle signal Sθa. Then, the procedure terminates.

Referring to Fig. 1C, another example of the optical disk shown in Fig. 1A is shown. In this example, the optical disk 1 has further one calibration data recording area 4 in addition to the calibration data area 3 of Fig. 1A. Although these two areas 3 and 4 are separately formed in the inner circumference and the outer circumference in Fig. 1C, these two ares 3 and 4 can be formed in other places in the disk 1, as described above.

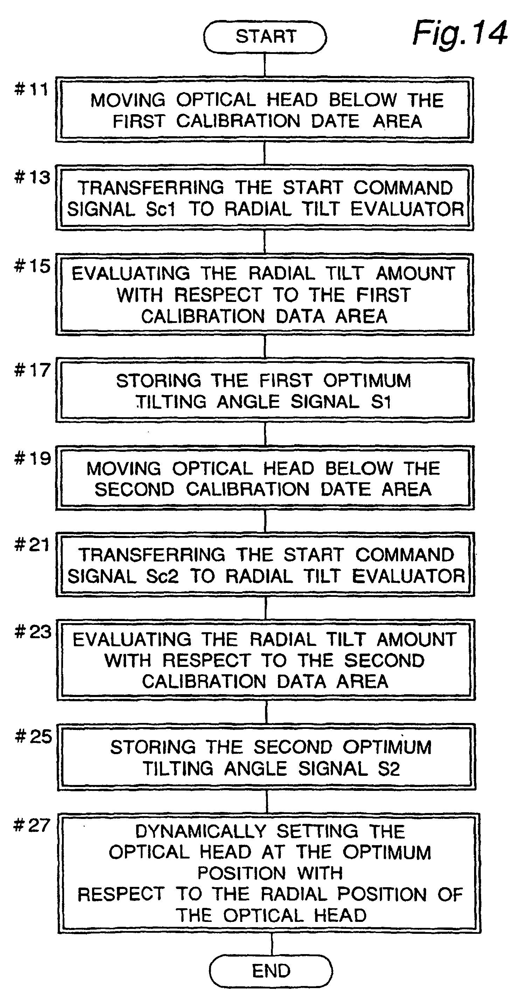

Referring to Fig. 14, the radial tilt adjuring operation by the optical disk apparatus of Fig. 8 with this optical disk 1 of Fig. 1C is shown. Principally the operations of Fig. 14 is the same as those of Fig. 11 expect the operations relating to the second recording area 4 as follows.

For example, the blocks #11, #13, and #15 correspond to the blocks #1, #3, and #5, respectively.

However, at block #17, the radial tilt controller 54 stores the optimum tilting angle signal Sθa obtained at the block #5 as a first optimum tilting angle signal S1 in the memory storage 55.

The blocks #19, #21, #23, and #25 relate to the second radial tilt evaluation operations with respect to the second data area 4. Thus, the blocks #19, #21, and #23 correspond to the blocks #11, #13, and #15, respectively. Then, at block #25, the optimum tilting angle signal Sθa obtained at the block #23 is stored as a second optimum tilting angle signal S2 in the third memory storage 55 of the controller 54.

At block #27, the radial tilt controller 54 interpolates the optimum titling angles between the inner circumference area (3) and the outer circumference area (4). Then, the controller 54 controls the radial tilt adjuster 67 to set the optical pickup unit Os (122 and 58) at each of thus interpolated tilting angle according to the position of pickup 122 with respect to the radial direction.

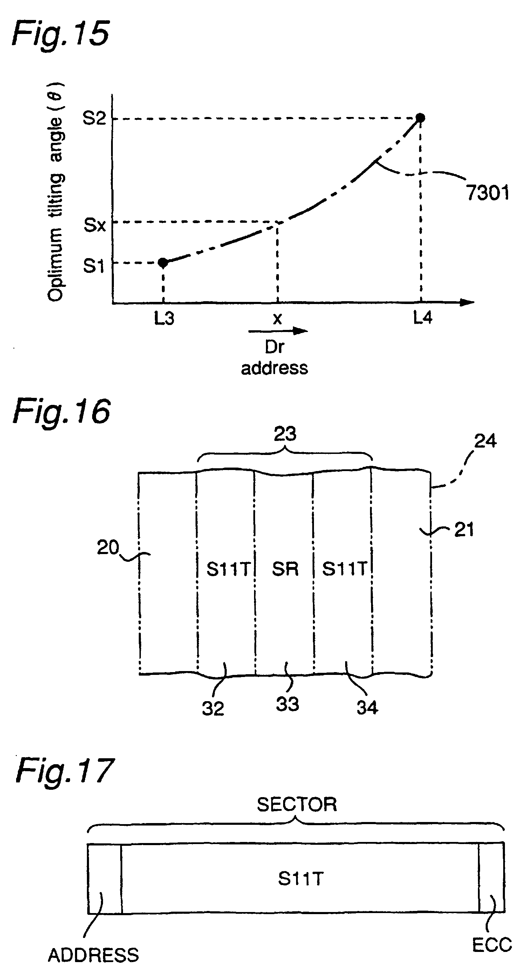

Referring to Fig. 15, the concept of tilting angle interpolation by the block #27 is schematically shown. In general, the optimum tilting angle Sθ (corresponding to the radial tilt) shows its minimum (S1) at the inner circumference (L3), increases gradually outward, and shows its maximum (S2) at the outer circumference (L4). Based on this facts, an optimum tilting angle (Sx) at any position (x) between the inner and outer circumferences of the disk 1 can be determined by an arithmetical interpolating method.

In Fig. 15, the vertical axis represents the optimal tilting angle (θ) for minimizing the radial tilt, and the horizontal axis represents the address of optical pickup (head) with respect to the scanning direction Dr. Now, the first and optimum angle S1 and S2 are detected with respect to the first and second calibration data areas 3 and 4, respectively, and are plotted at the address 3 and 4. These two plotted points can be connected by a line 7301 which can be defined as a function of address and the tilting angle. By determining function factors of the line, it is possible to simulate the actual radial tilt at the recording area 2 between the first and second data area 3 and 4. The function factors of this simulation line 7301 can be theoretically or experimentally determined.

Furthermore, thus determined function factors of the simulation line 7301 can be recorded in a suitable area of the optical disk 1. The optical disk apparatus according to the present invention can promptly and easily calibrates the radial tilt dynamically even when the optical disk set therein is replaced with other disk.

Furthermore, by calculating the radial tilt of the optical disk 1 based on the calibration data track area 23 formed in that optical disk 1, the recorded signal is reproduced from the aimed recording tracks with reduced crosstalk from the neighboring tracks adjacent to the aimed track. Therefore, the reliability of the reproduction operation is further improved.

Still furthermore, since the optimum tilting angle θa is stored in the third memory 55 of the radial tilt controller 54 as the optimum tilting angle signal Sθa, it is possible to compare the radial tilt amount of the optical disk apparatus with respect to the optical disks set in the past time, before the delivery to the end user for example, enabling the function check of the optical disk apparatus itself.

The radial tilt calibration according to the present invention can be performed at any time when the radial tilt calibration is required. For example, the optical disk may changes its pose or position with respect to the optical pickup or optical head when much vibrations are applied thereto.

The equalizer 126 can be removed from the optical disk apparatus of Fig. 8, when the equalizer 126 reduces the jittering of the reproduced signal too much to detect the jittering amount. In this case the output from the preamplifier 125 is directly input to the binarization circuit 127.

As the jitter amount measurer 41, any other means which can detect the jittering amount of the reproduced signal Sd can be used. It is also possible that the radial tilt shows different value at the inner and outer circumferences of the optical disk when the optical disk is subject to the dimensional errors over the allowable range. Such error may be caused by unevenness of reflection layer, deformation thereof, and improper forming process, for example. In this case, it is preferable to compensate the radial tilt with respect to the entire recording area of the optical disk by adjusting the tilting angle of optical pickup Os (122 and 58). For this purpose, according to the present invention, the optical disk having two calibration data areas formed in the inner and outer circumferences, respectively, is provided, as described above with reference to Fig. 1C.

Referring to Fig. 16, a comparative example of the calibration data track area 23 of Fig. 4 is shown. In this example, the first and second tracks are both recorded with the 11T signal S11T. The second track 33 is recorded with the random signal SR.

The random signal SR is produced according to the 2-10 modulation, including 3T signal S3T to 11T signal S11T. This situation can be described as follows with reference to the pit mark and pit space on the optical disk 1. The random signal SR is combination of a plurality of pit marks and pit spaces. The pit marks have a predetermined number, nine for example, of different length each corresponding to that of 3T signal S3T to 11T signal S11T. The pit spaces have a predetermined, nine for example, of different lengths each corresponding to that of signals S3T to signal S11T.

The first and third track 32 and 34 are recorded only with 11T signal S11T which is a consecutive pattern made by a combination of a pit mark having a length corresponding to the 11T signal S11T and a pit space having a length corresponding to the 11T signal S11T. It is also possible to add address and ECC to the 11T signal within a single sector thereof, provided that the enough amount of 11T signal components are included therein.

Referring to Fig. 17, one example of the 11T signal S11T within a single sector is shown. The address data and Error Correction Code are added to ends of the 11T signal S11T, respectively.

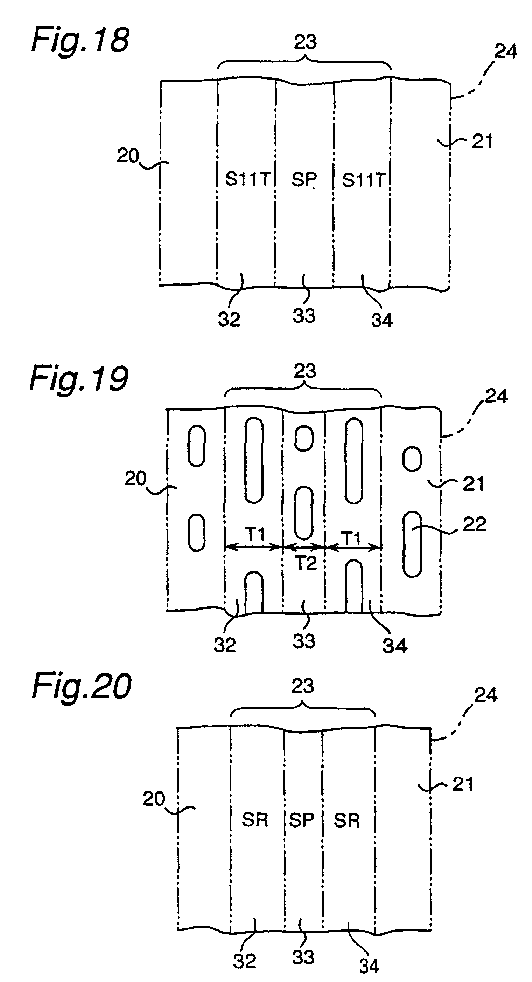

Referring to Fig. 18, an example of the calibration data track area 23, similar to that of Fig. 16, is shown. In this example, the second track 33 is recorded with the specific pattern signal SP according to the present invention. The specific pattern signal SP is constructed as previously described with reference to Figs. 5A and 5B.

Referring to Fig. 19, an alternative of calibration data track area 23 of Fig. 3 is shown.
Although all tracks 32, 33, and 34 has the same track width T1 in the data area of Fig. 3, the second track 33 has a track width T2 narrower than the width T1 of other tracks 32 and 34 in this example.

Referring to Fig. 20, a first example of the calibration data track area 23 of Fig. 19 is shown. The first and third tracks 32 and 34 are recorded with the random signal SR. The second track 33 is recorded with the specific pattern signal SP according to the present invention.

In this example, since the second track 33 has a narrow track width other than the other tracks 32 and 34, the crosstalk to the second track 33 from the neighboring tracks 32 and 34 is greater than the case of Fig. 4. Therefore, the jittering amount caused by the radial tilt is also greater, enabling a further accurate detection of radial tilt. In addition to this, since the calibration data track area 23 occupies a narrower space, more space can be used for recording the information.

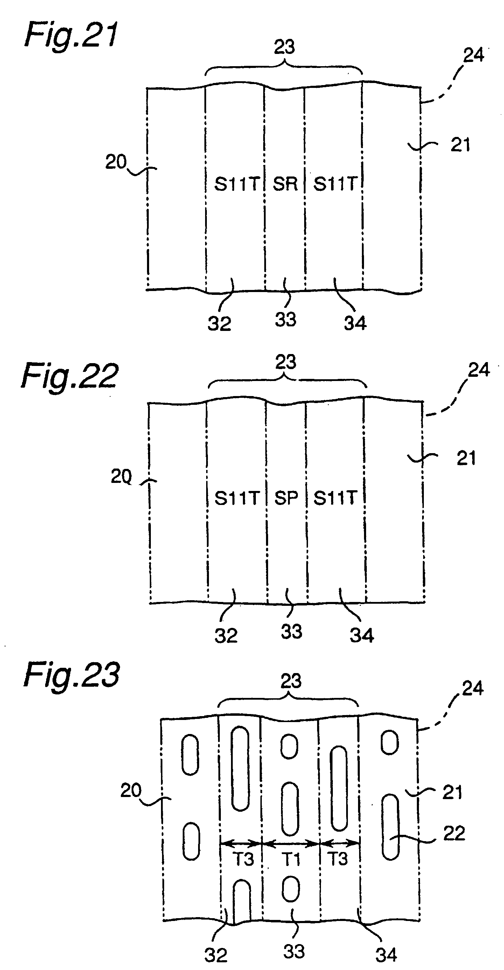

Referring to Fig. 21, a second comparative example of the calibration data track area 23 of Fig. 19, similar to that of Fig. 16, is shown. In this example, the first and third tracks 32 and 34 are recorded with the 11T signal S11T, and the second track 33 is recorded with the random signal SR.

Referring to Fig. 22, a third example of the calibration data area of Fig. 19, similar to that of Fig. 18, is shown. In this example, the first and third tracks 32 and 34 are recorded with the 11T signals S11T, and the second track 33 is recorded with the specific pattern signal SP according to the present invention.

Referring to Fig. 23, other alternative of calibration data track area 23 of Fig. 3, similar to that of Fig. 19, is shown. Although the second track 33 has a track width T2 narrower than the width T1 of other tracks 32 and 34 in Fig. 19, the first and third tracks 32 and 34 has the same width T3 narrower than the width T1 of the second track 33 in this example.

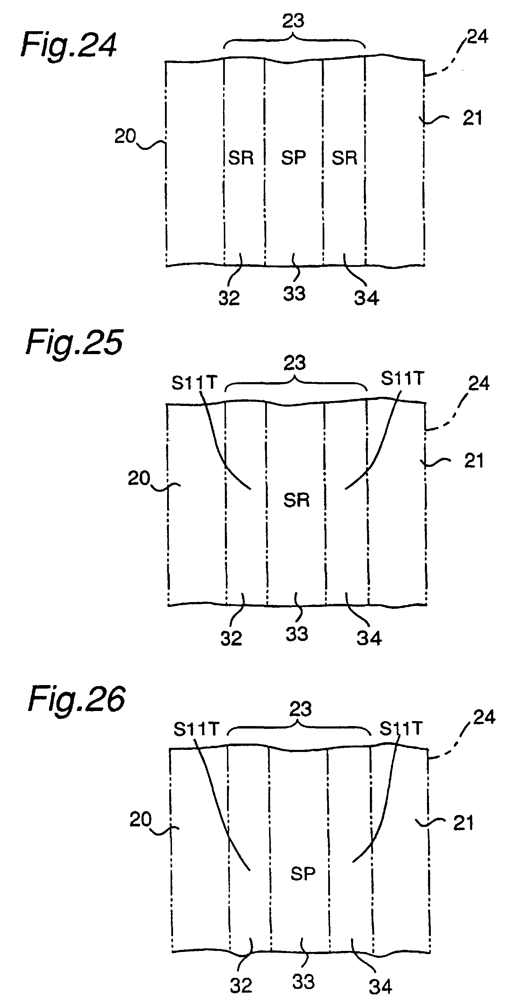

Referring to Fig. 24, a first example of the data track area 23 of Fig. 17, similar to that of Fig. 20, is shown. The first and third tracks 32 and 34 are recorded with the random signal SR, and the second track 33 is recorded with the specific pattern signal SP according to the present invention.

In this example, since the first and third tracks 32 and 34 have the narrower track width T3 other than the second track 33, the crosstalk to the second track 33 from the neighboring tracks 32 and 34 is greater than the case of Fig. 4. Therefore, the jittering amount caused by the radial tilt is also greater, enabling a further accurate detection of radial tilt. In addition to this, since the calibration data track area 23 occupies a narrower. space, more space can be used for recording the information.

Referring to Fig. 25, a second comparative example of the data track area 23 of Fig. 17, similar to that of Fig. 21, is shown. The first and third tracks 32 and 34 are recorded with the 11T signal S11T, and the second track 33 is recorded with the random signal SR.

Referring to Fig. 26, a third example of the data track area 23 of Fig. 23, similar to that of Fig. 22, is shown. The first and third tracks 32 and 34 are recorded with the 11T signal S11T, and the second track 33 is recorded with the specific pattern signal SP according to the present invention.

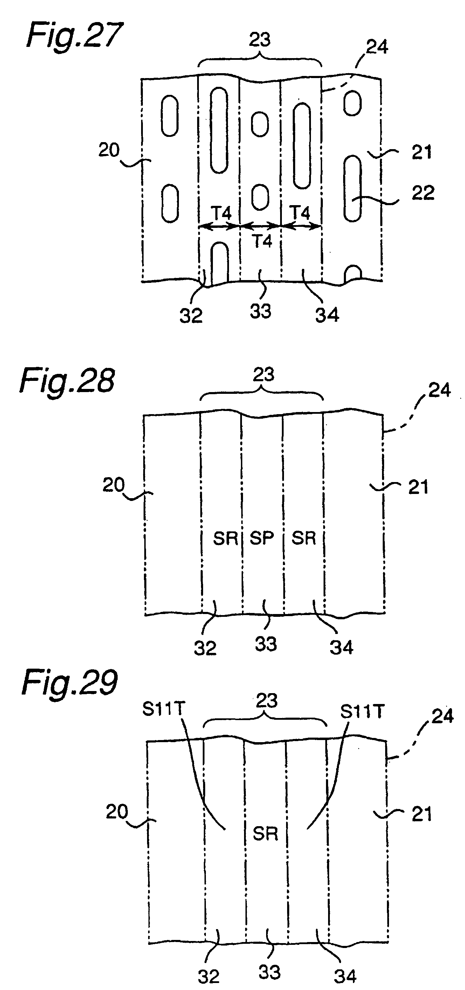

Referring to Fig. 27, still other alternative of calibration data track area 23 of Fig. 3, similar to that of Fig. 3, is shown. Although all the tracks 32, 33, and 34 have the same track width T4 narrower than the track width T1 in the recording area 2 of the optical disk 1.

Referring to Fig. 28, a first example of the data track area 23 of Fig. 27, similar to that of Fig. 20, is shown. The first and third tracks 32 and 34 are recorded with the random signal SR, and the second track 33 is recorded with the specific pattern signal SP according to the present invention.

In this example, all calibration data tracks 32, 33, and 34 have the track width T4 narrower than that of recording tracks formed in the recording area 2 of the optical disk 1. Therefore, the crosstalk to the second track 33 from the neighboring tracks 32 and 34 is greater than the case of Fig. 4. Therefore, the jittering amount caused by the radial tilt is also greater, enabling a further accurate detection of radial tilt. In addition to this, since the calibration data track area 23 occupies a narrower space, more space can be used for recording the information.

Referring to Fig. 29, a second comparative example of the data track area 23 of Fig. 27, similar to that of Fig. 21, is shown. The first and third tracks 32 and 34 are recorded with the 11T signal S11T, and the second track 33 is recorded with the random signal SR.

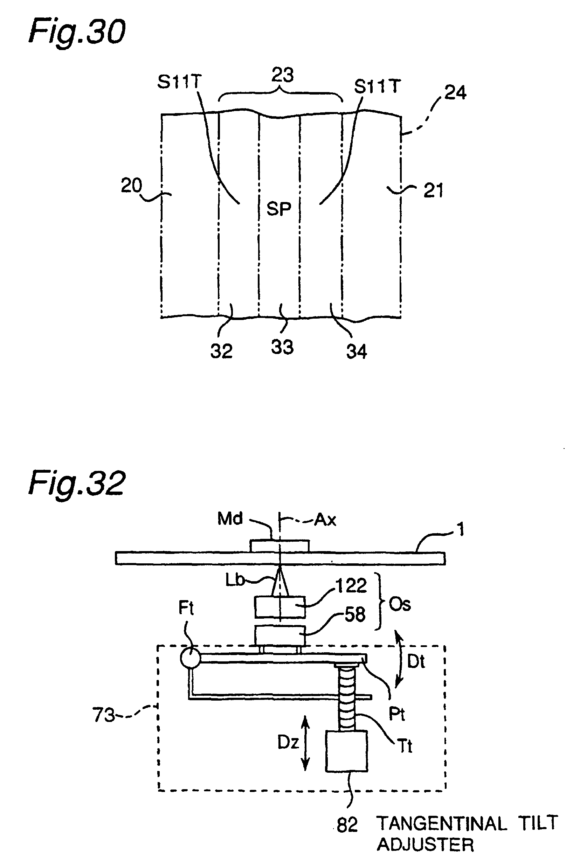

Referring to Fig. 30, a third example of the data track area 23 of Fig. 27, similar to that of Fig. 22, is shown. The first and third tracks 32 and 34 are recorded with the 11T signal S11T, and the second track 33 is recorded with the specific pattern signal SP according to the present invention.

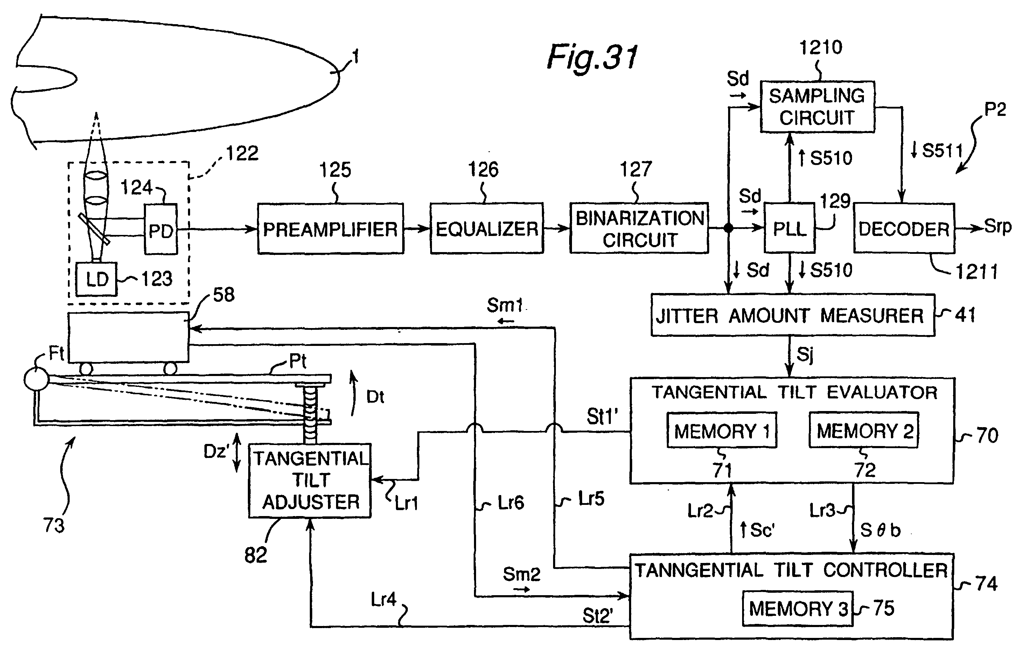

Referring to Fig. 31, an optical disk apparatus according to a second example is shown. The optical disk apparatus P2 has a construction very similar to that of Fig. 8, wherein the radial tilt evaluator 50, radial tilt controller 54, and radial tilt adjuster 67 are replaced by a tangential tilt evaluator 70, a tangential tilt controller 74, and a tangential tilt adjuster 82, respectively.

The tangential tilt evaluator 70 and tangential tilt controller 74 are constructed in substantially the same structure as those of the radial tilt evaluator 50 and radial tilt controller 54, respectively, as best shown in Fig. 31. The tangential tilt adjuster 73 is also constructed in a construction similar to that of the radial tilting adjuster 60 of Fig. 10 except the tilting unit 73.

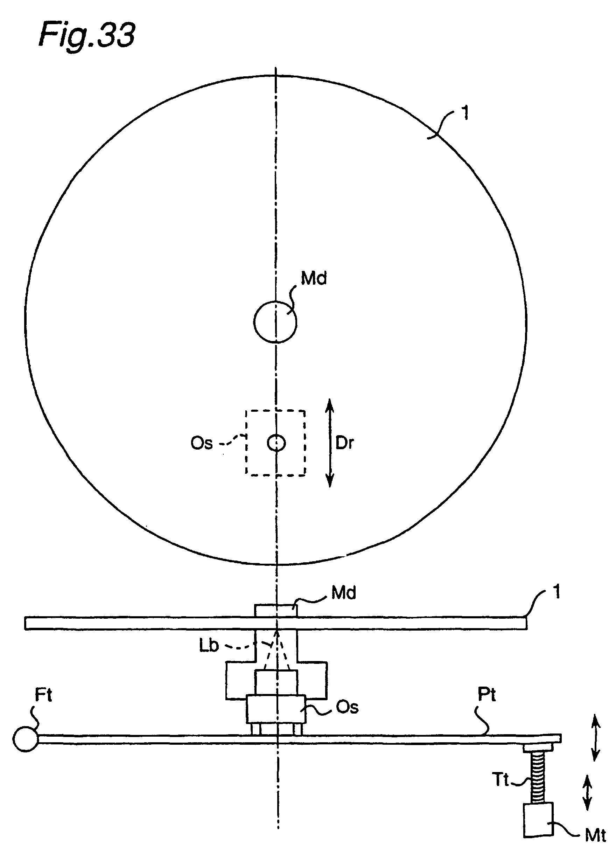

Referring to Fig. 32, the tilting unit 73 is shown. The tilting unit 73 has a base plate Pt for supporting the transporter 58 thereon and a fulcrum member Ft. One end of base plate Pt is redoubtably connected the fulcrum member Fr, as in a manner of cantilever, and another end is placed on one end of a vertical reciprocating member Tt. The other end of the vertical reciprocating member Tt is slidably connected to a radial tilt adjuster 82. In this example, the vertical reciprocating member Tt is made by a screw which can be turned by the radial tilt adjuster 82, and is reciprocated in the vertical direction indicated by an arrow Dz.

According to the reciprocation of the screw member Tt, the base plate Pt including the transporter 58 and the optical pickup 122 pivotally rotates in an arrow direction Dr with respect to the fulcrum member Ft. In other words, the radial tilt of the optical pickup system Os can be determined by the tangential tilt adjuster 82. It is to be noted that the base plates Pr and Pr of radial and tangential tilting units 60 and 73 can be formed in a single unit having two fulcrum Fr and Ft.

According to this example, the position where the jittering amount is the smallest corresponds to the optimum tilting angle at which the tangential tilt is the smallest. Based on this facts, the tangential tilt can be compensated by adjusting the titling angle of the optical pickup unit Os. Sine the operations by this embodiment are basically similar to those described with reference to Figs. 11, 13, and 14 with respect to the optical disks 1 of Figs. 1A, 1B, and 1C, the further description is omitted for the sake of brevity.

Referring to Fig. 33, the relationship between the base plate Pt of the tilting unit 73 and the tangential tilt of the optical disk 1 is shown schematically. When the optical disk 1 has no tangential tilt, the base plate Pt is set parallel to the surface of the optical disk 1 so as to impinge the laser beam Lb, along the optical axis, on the disk 1 with a right angle. However, when the optical disk 1 has a tangential tilt θt as inclined in any of the arrow directions, the optical disk surface inclines by the tangential tilt angle with respect to the optical axis Ax. For compensating this inclination angle θt, a screw motor Mt of the tangential tilt adjuster 73 actuates the free end of the base plate Pt in the corresponding direction by the predetermined angle according to the tangential tilt angle θt.

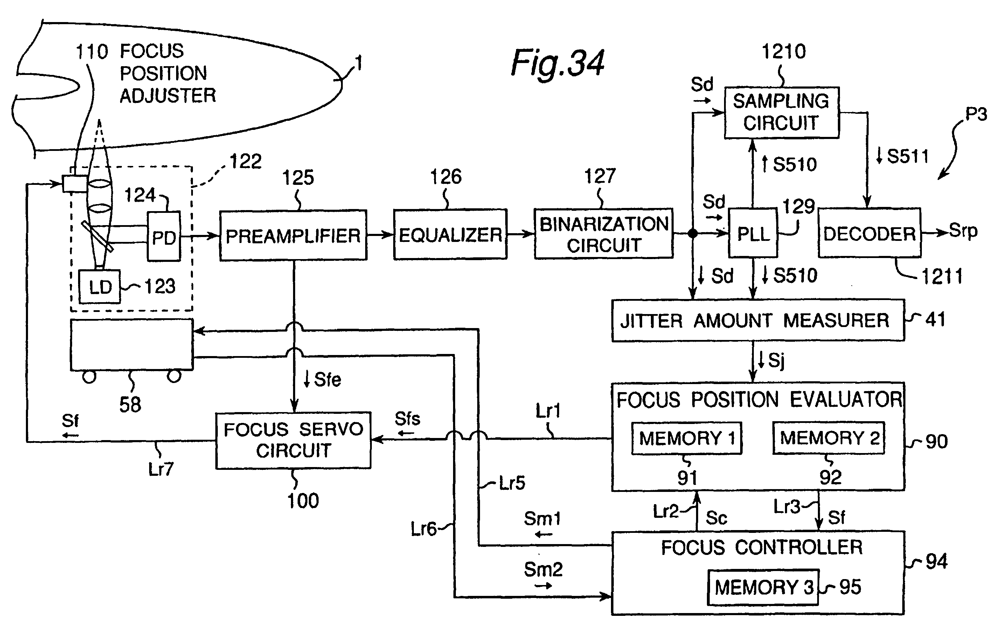

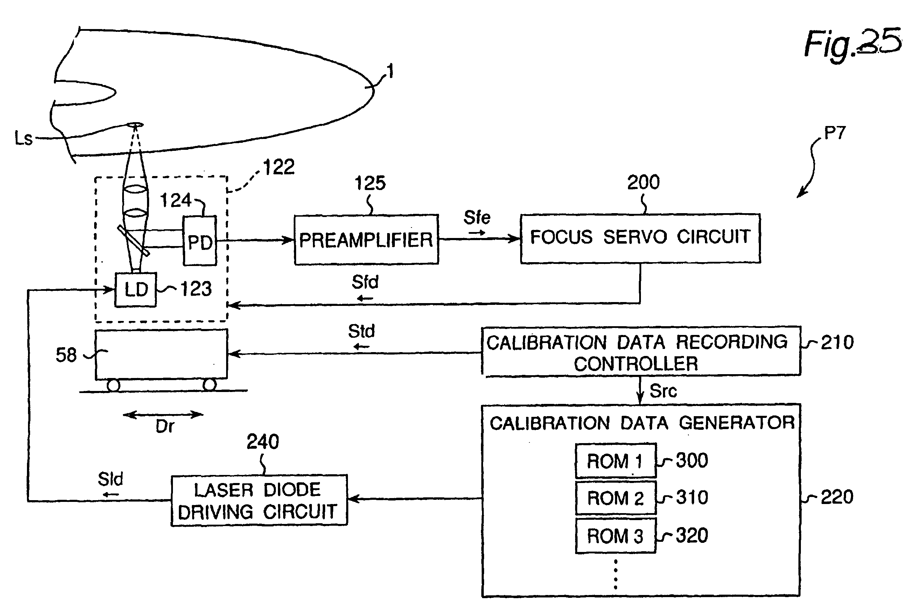

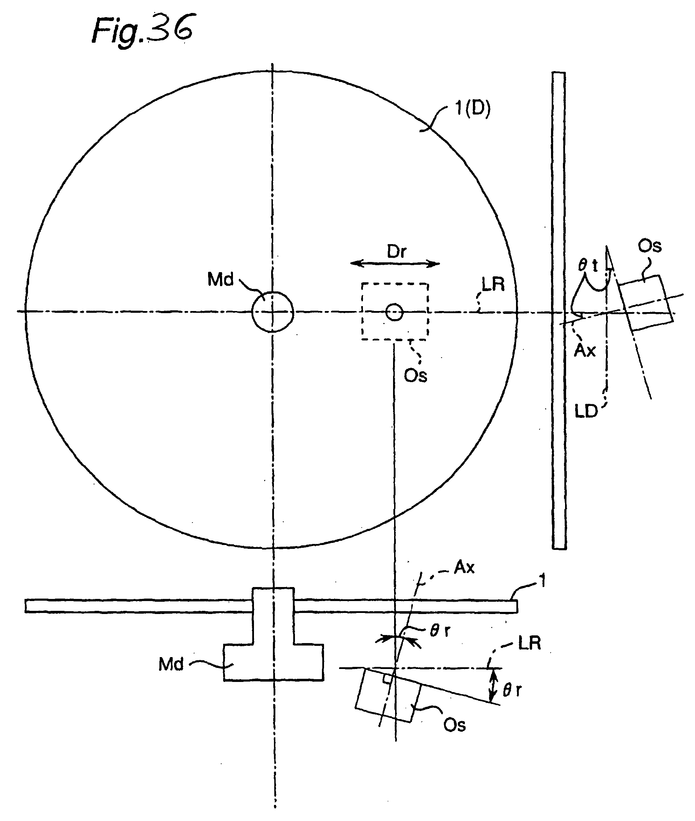

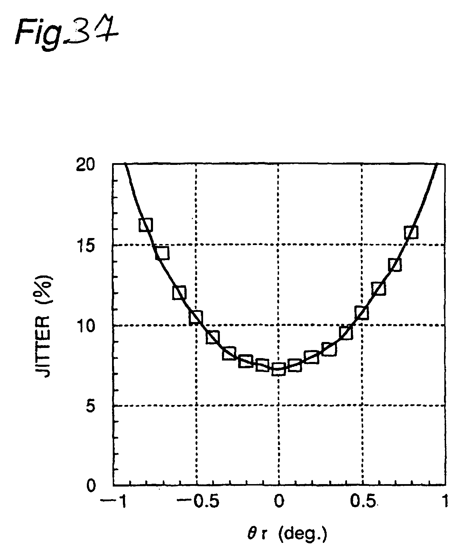

Referring to Fig. 34, an optical disk apparatus according to a third example is shown. The optical disk apparatus P3 has a construction very similar to that of Fig. 8, wherein the radial tilt evaluator 50, radial tilt controller 54, and radial tilt adjuster 67 including titling unit 60 are replaced by a focus position evaluator 90, a focus controller 94, a focus servo circuit 100, and a focus position adjuster 110 connected to the focus servo circuit 100 by a line Lr7, respectively. Note that tilt adjuster 67 including tilting unit 60 and the tangential adjuster 82 including tilting unit 73 can be used together in this embodiment, but are omitted for the sake of brevity.

The focus position evaluator 90 and focus controller 94 are constructed in substantially the same structures as those of the radial tilt evaluator 50 and radial tilt controller 54, respectively, as best shown in Fig. 34. The focus position evaluator 90 produces a focus servo circuit control signal Sfs instead of the radial tilt adjuster control signal St1 (by the radial tilt evaluator 50) for controlling the focus servo circuit 100.

According to this example, the position where the jittering amount is the smallest corresponds to the optimum focus position at which the focus error signal should be the smallest. Based on this facts, the focus servo circuit 100 produces a focus compensation signal Sf indicative of that the current position is the optimum position whereat the focus error signal should be zero or the smallest. This focus compensation signal Sf is transferred to the focus position adjuster 110 through the line Lr7, so that the focus position adjuster 97 adjusts the optical pickup to compensate the focus error signal detected at the current position is zero or the smallest. Thus, the focus error depending on the electrical propensity of the circuit can be compensated.

Since the focus position can be compensated by adjusting the titling angle of the optical pickup unit Os, as described in the above, the operations by this embodiment are also basically similar to those described with reference to Figs. 11, 13, and 14.

Referring to Fig. 35, an optical disk apparatus, used for forming the calibration data track area 23 on the optical disk 1, is shown. The optical disk apparatus P7 according to this embodiment has a construction similar to those of Figs. 8, 31, 34, and 35 but different in the following points relating to recording with predetermined calibration data to each of data track of the calibration data track area 23. Herebelow, only the portion essential to forming the calibration data track area 23 is described, and other parts similar or common with those of Figs. 8, 31, and 34 are omitted in Fig. 35 for the sake of brevity.

The optical disk apparatus P7 includes the optical pickup unit 122 including the laser diode 123 and the pin photo diode 1241 for recording and reproducing the information to and from the optical disk 1. The transporter 58 is provided for moving the optical pickup unit 122 for scanning the recording tracks formed on the optical disk 1. Thus, the optical pickup unit 122 and the transport 58 construct an optical pickup system Os. From the preamplifier 125 connected to the optical pickup unit 122, the focus error signal Sfe is transferred to a focus servo circuit 200. The focus servo circuit 200 produces a focus driving signal Sfd for driving a focus controlling system (not shown) incorporated in the optical pickup unit Os. Note that the focus servo circuit 200 corresponds to the focus servo circuit 100 of Fig. 34.

A calibration data recording controller 210 produces a transporter driving signal Std for controlling of the movement of the optical pickup unit, and is connected to the transport 58 for transferring the signal Std thereto. The calibration data recording controller 210 further produces a calibration data selection signal Src indicative of the calibration data to be recorded in the calibration data track area 23.

A calibration data generator 220 having a plurality of storages such as ROMs for storing pit pattern data corresponding to each of calibration data which are previously described with reference to accompanying figures. Note only three ROMs 300, 310, and 320, are shown in Fig. 35 for the sake of brevity, but not limited three.

The calibration data generator 220 is connected to the calibration data recording controller 210 for receiving the calibration data signal Src. Based on the calibration data signal Src, the calibration data generator 220 selects specific ROMs storing the pit pattern data indicated by the signal Src from ROMs 300, 320, 320, and so on. From these selected specific ROMs, the corresponding pit pattern data are read out in a predetermined order and timing for writing to the corresponding data tracks 32, 33, and 34 of the area 223 based on the calibration signal Src.

A laser diode driving circuit 240 is connected to the calibration data generator 220 for receiving the pit pattern data thus readout from each of corresponding ROMS and produce a laser diode driving signal Sℓd for controlling the laser diode 123 of the optical pickup unit Os (122). The laser diode driving circuit 240 is further connected to the laser diode 123 for transferring the laser diode driving signal Sℓd thereto.

Thus, based on the signals Std and Src, the optical pickup unit Os is controlled to record each of recording tracks 32, 33, and 34 of the calibration data area 223 with the predetermined calibration data represented by predetermined pit patterns. As described in the above, the sizes of pit marks and pit spaces are determined with respect to the spot size Ls of the laser beam impinged thereto for reproducing signal therefrom. However, it is needless to say that the sizes of pit marks and pit spaces can be determined with respect the spot size (Ls) of the laser beam impinged thereto for recording pit marks thereto.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

### Industrial Applicability

The prevent invention can be applicable for reproducing the digital information from the optical disk bearing digital information even when such optical disk physically deflect or distort due to the gravity, and when such disk is not set the optical disk apparatus with dimensional incorrectness. Furthermore, the electrical propensity peculiar to the circuits used in the optical disk apparatus.

Thus, the manufacturer can ship the optical disk with the calibration patters recorded to the calibration record area of the disk. The user can compensates for the distortion such as radial tilt, tangential tilt, and electric propensity affecting the reproductivity of the digital signal by using the optical disk apparatus incorporated with the calibration mechanism according to the present invent.

Still furthermore, the user can record the calibration pattern to the recordable type of optical disk for the first time to use that disk by using the recordable type of optical disk apparatus according to the present invention.

## Claims

1. An optical disk (1) for use in an optical disk apparatus (P1) which reproduces signals, from a plurality of recording tracks formed on said optical disk (1), by focussing a light spot (Ls) on the plurality of recording tracks, said optical disk (1) including a first recording track (2);
**characterised by** a calibration data track area (3) comprising a second recording track (3,23,33) having recorded therein a predetermined mark pattern (SP);
wherein said predetermined mark pattern (SP) comprises a combination of two first marks (3204;3206) wherein one of the first marks (3204) has a first predetermined length 6T, the other of the first marks (3206) has a second predetermined length 7T, and
a second mark (3202) having a third predetermined length 3T,
wherein said two first marks (3204; 3206) are separated from each other by a first predetermined space having said third predetermined length, and
wherein said second mark (3202) is separated from said two first marks (3204; 3206) by a second predetermined space having the second predetermined length and the second mark (3202) is separated from a subsequent mark by a third predetermined space having said first predetermined length; and where T is the channel bit length.

2. An optical disk (1) as claimed in claim 1, further comprising a third and a fourth recording tracks (32 and 34) each provided on the opposite sides of said second recording track (33) for causing crosstalk in said signal (Sd) reproduced from said second recording track (33) with signals (Sd) reproduced from said third and fourth recording tracks (32 and 34).

3. An optical disk (1) as claimed in claim 2, wherein said third and fourth tracks (32 and 34) comprises plural marks arranged at random.

4. An optical disk (1) as claimed in claim 2, wherein said first, second, and third tracks (33,32,34) have the same (T1) track widths (Tp).

5. An optical disk (1) as claimed in claim 2 or 3, wherein the track width (T2) of said first track (33) is smaller than the track width (T1) of said second and third tracks (32,34).

6. An optical disk (1) as claimed in claim 2 or 3, wherein the track width (T1) of said first track (33) is greater than the track width (T3) of said second and third tracks (32,34).

## Patentansprüche

1. Optische Platte (1) zur Verwendung in einer Vorrichtung (P1) für optische Platten, welche Signale von einer Mehrzahl von Aufzeichnungsspuren reproduziet, die auf der optischen Platte (1) gebildet sind, durch Fokussieren eines Lichtpunkts (Ls) auf der Mehrzahl von Aufzeichnungsspuren, wobei die optische Platte (1) eine erste Aufzeichnungsspur (2) aufweist,
**gekennzeichnet durch** einen Kalibrierungsdatenspurbereich (3), der eine zweite Aufzeichnungsspur (3, 23, 33) aufweist, auf der ein vorbestimmtes Markierungsmuster (SP) aufgezeichnet ist,
wobei das vorbestimmte Markierungsmuster (SP) eine Kombination von zwei ersten Markierungen (3204; 3206) aufweist, wobei eine der ersten Markierungen (3204) eine erste vorbestimmte Länge 6T aufweist und die andere der ersten Markierungen (3206) eine zweite vorbestimmte Länge 7T aufweist, und
eine zweite Markierung (3202), welche eine dritte vorbestimmte Länge 3T aufweist,
wobei die zwei ersten Markierungen (3204; 3206) voneinander **durch** einen ersten vorbestimmten Abstand mit dieser dritten vorbestimmten Länge getrennt sind und
wobei die zweite Markierung (3202) von den zwei ersten Markierungen (3204; 3206) **durch** einen zweiten vorbestimmten Abstand mit der zweiten vorbestimmen Länge getrennt ist und die zweite Markierung (3202) von einer folgenden Markierung **durch** einen dritten vorbestimmten Abstand mit der ersten vorbestimmten Länge getrennt ist, und wobei T die Kanalbitlänge ist.

2. Optische Platte (1) nach Anspruch 1, die ferner eine dritte und eine vierte Aufzeichnungsspur (32 und 34) aufweist, von denen jede auf den gegenüberliegenden Seiten der zweiten Aufzeichnungsspur (33) vorgesehen ist zum Verursachen von Nebensprechen in dem Signal (Sd), das von der zweiten Aufzeichnungsspur (33) reproduziert worden ist, mit Signalen (Sd), welche von der dritten und vierten Aufzeichnungsspur (32 und 34) reproduziert worden sind.

3. Optische Platte (1) nach Anspruch 2, wobei die dritte und vierte Spur (32 und 34) mehrere Markierungen aufweisen, die willkürlich angeordnet sind.

4. Optische Platte (1) nach Anspruch 2, wobei die erste, zweite und dritte Spur (33, 32, 34) die gleichen (T1) Spurbreiten (Tp) aufweisen.

5. Optische Platte (1) nach Anspruch 2 oder 3, wobei die Spurbreite (T2) der ersten Spur (33) kleiner ist als die Spurbreite (T1) der zweiten und dritten Spur (32, 34).

6. Optische Platte (1) nach Anspruch 2 oder 3, wobei die Spurbreite (T1) der ersten Spur (33) größer ist als die Spurbreite (T3) der zweiten und dritten Spur (32, 34).

## Revendications

1. Disque optique (1) destiné à une utilisation dans un dispositif à disque optique (P1) qui reproduit des signaux, à partir d'une pluralité de pistes d'enregistrement formées sur ledit disque optique (1), en focalisant une trace de lumière (Ls) sur la pluralité de pistes d'enregistrement, ledit disque optique (1) comprenant une première piste d'enregistrement (2),
**caractérisé par** une zone de piste de données de calibrage (3) comprenant une seconde piste d'enregistrement (3, 23, 33) comportant une séquence de marques prédéterminées (SP) enregistrée dans celle-ci,
où ladite séquence de marques prédéterminées (SP) comprend une combinaison de deux premières marques (3204 ; 3206) dans laquelle l'une des premières marques (3204) présente une première longueur prédéterminée 6T, l'autre des premières marques (3206) présente une seconde longueur prédéterminée 7T, et
une seconde marque (3202) présentant une troisième longueur prédéterminée, 3T,
dans lequel lesdites deux premières marques (3204 ; 3206) sont séparées l'une de l'autre d'un premier espace prédéterminé présentant ladite troisième longueur prédéterminée, et
dans lequel ladite seconde marque (3202) est séparée desdites deux premières marques (3204 ; 3206) par un second espace prédéterminé présentant la seconde longueur prédéterminée et la seconde marque (3202) est séparée d'une marque suivante par un troisième espace prédéterminé présentant ladite première longueur prédéterminée, et où T représente la longueur d'un bit de canal.

2. Disque optique (1) selon la revendication 1, comprenant en outre une troisième et une quatrième piste d'enregistrement (32 et 34), chacune étant disposée sur les côtés opposés de ladite seconde piste d'enregistrement (33) afin de provoquer une diaphonie dans ledit signal (Sd) reproduit à partir de ladite seconde piste d'enregistrement (33) avec des signaux (Sd) reproduits depuis lesdites troisième et quatrième pistes d'enregistrement (32 et 34).

3. Disque optique (1) selon la revendication 2, dans lequel lesdites troisième et quatrième pistes (32 et 34) comprennent plusieurs marques disposées de façon aléatoire.

4. Disque optique (1) selon la revendication 2, dans lequel lesdites première, seconde et troisième pistes (33, 32, 34) présentent les mêmes (T1) largeurs de piste (Tp).

5. Disque optique (1) selon la revendication 2 ou 3, où la largeur de piste (T2) de ladite première piste (33) est plus petite que la largeur de piste (T1) desdites seconde et troisième pistes (32, 34).

6. Disque optique (1) selon la revendication 2 ou 3, dans lequel la largeur de piste (T1) de ladite première piste (33) est supérieure à la largeur de piste (T3) desdites seconde et troisième pistes (32, 34).
